# EUROPEAN PATENT SPECIFICATION

(11) **EP 2 677 855 B1**
(45) Date of publication and mention of the grant of the patent: **20.06.2018**
(21) Application number: 12713287.6
(22) Date of filing: 20.02.2012
(51) Int. Cl.: A01G 7/06

(54) **TREE INJECTION APPARATUS AND METHODS**
BAUMINJEKTIONSVORRICHTUNG UND VERFAHREN
APPAREIL ET PROCÉDÉS POUR UNE INJECTION DANS LES ARBRES

(30) Priority: 21.02.2011 US 201161444873 P
(43) Date of publication of application: 01.01.2014
(73) Proprietor: Syngenta Participations AG, 4058 Basel (CH)
(72) Inventor: OBRIST, Gery, 4058 Basel (CH); WYSS, Peter, 4058 Basel (CH)
(74) Representative: Syngenta International AG
(86) International application number: PCT/IB2012/000366
(87) International publication number: WO 2012/114197

(56) References cited:
- WO-A2-2004/004443
- US-A1- 2007 266 628

## Description

### FIELD OF THE DISCLOSURE

The present disclosure relates generally to injecting liquid into the stem or trunk of a plant, and more particularly, this disclosure relates to injecting liquid into the sapwood of a tree trunk.

### BACKGROUND OF THE DISCLOSURE

Arborists may inject liquids, such as insecticides, fungicides, growth regulators, nutrients and/or fertilizers, into the sapwood of tree trunks in an effort to maintain or improve the health of the trees. For example and in one of the known methods, a borehole is formed into the sapwood, thereafter the outer end of the borehole is closed by fixedly mounting a plug in the outer end of the borehole, and thereafter a needle of an injector is inserted through a septum of the plug so that the tip of the needle projects farther into the borehole than the plug. Then, the injector may discharge liquid into the borehole by way of the portion of the needle that projects farther into the borehole than the plug. The needle may be withdrawn from the plug, and the plug's septum may seal the plug so that the injected liquid is contained in the inner portion of the borehole until the injected liquid is drawn upwardly in the sapwood of the tree.

Advantageously, the plug may optionally remain installed in the tree trunk for subsequent treatments by way of the plug. Notwithstanding, the above-described installation of the plug as a separate step in the initial treatment of the tree may be considered to be labor intensive and time consuming, such as when numerous trees are to be treated. Accordingly, there is a desire for tree injection apparatus and methods that provide a new balance of properties.

WO 2004/004443 relates to methods for injecting desired amounts of fluids into plants.

US 20070266628 discloses a system and method for injecting liquids into trees with an injection device having a liquid container and a removable needle.

### BRIEF SUMMARY OF THE DISCLOSURE

The following presents a simplified summary of this disclosure in order to provide a basic understanding of some aspects of this disclosure. This summary is not an extensive overview of the disclosure and is not intended to identify key or critical elements of the invention or to delineate the scope of the invention. The purpose of this section is to present some concepts of the disclosure in a simplified form as a prelude to the more detailed description that is presented later.

In accordance with one aspect of this disclosure, a plug may be positioned on a tip of a nozzle of an injector, and the injector may be pushed toward a borehole in a tree trunk so as to introduce and mount the plug in the borehole using the injector. More specifically, the plug may be releasably mounted on the needleless tip of the injector's nozzle during the introducing of the plug into, and the mounting of the plug within, the borehole. Then, the injector may be operated, while the plug is seated both within the borehole and on the injector's tip, to inject liquid into the borehole by way of the plug. For example, the injected liquid may be one or more of insecticides, fungicides and/or fertilizers. Then, the injector may be withdrawn from the tree trunk, and the plug may optionally remain in the borehole for reuse.

According to one aspect of this disclosure, the plug may at least seek to function as, and preferably fully functions as, a barrier device for eliminating each of: any contact between the borehole and the injector's nozzle, any backflow of the liquid from the borehole, through the plug to the tip of the nozzle; and any exposure of the sapwood to the ambient environment after the plug is installed in the borehole. Notwithstanding and depending upon how the balance between, for example, costs and tolerances is struck, some minimal leakage around and/or through an occasional plug may occur, such that the plugs may be more generally characterized as being configured for substantially functioning as barrier devices.

For example, each plug may include a check valve for restricting backflow through the plug. In one example, the check valve may include an elastic tube that extends around at least a portion of the plug and selectively expands and contracts in response to pressure changes to respectively open and close one or more passageways that extend through the plug. As a more specific example, the tube may extend around one or more laterally arranged outlet openings of a passageway that extends through a body of the plug, for opening and closing the outlet openings in response to the pressure changes.

In one example, the injector includes an inlet for receiving the liquid, an outlet for discharging the liquid, a first chamber for alternately being in fluid communication with the inlet and the outlet, and at least a second chamber cooperatively associated with the first chamber so that the first chamber is for alternately receiving the liquid from the inlet and providing the liquid to the outlet under pressure. More specifically, the first chamber may provide the liquid to the injector's nozzle under pressure.

Other aspects of this disclosure will become apparent from the following.

### BRIEF DESCRIPTION OF THE DRAWINGS

Referring now in greater detail to the drawings, which may be schematic, and in which like numerals refer to at least generally alike parts throughout the several views, exemplary embodiments of this disclosure are described in the following.
Fig. 1 is a side elevation view of a plug mounted on the tip of a nozzle of an injector, in accordance with a first embodiment of this disclosure.
Fig. 2 is similar Fig. 1, except that it schematically illustrates the plug being pushed into a borehole in a tree, and the tree is partially sectioned to show the length of the bore and other features of the tree, in accordance with the first embodiment.
Fig. 3 is a partial view that is similar to Fig. 2, except that it schematically illustrates, for example, the injector's nozzle being pulled away from the plug within the borehole of the tree.
Fig. 4 is an isolated, side elevation view of a body of the plug, and Fig. 4 may be schematic, in accordance with the first embodiment.
Fig. 5 is an isolated side view of the plug, which includes a tube, in accordance with the first embodiment.
Fig. 6 is an isolated side view of the body of the plug.
Fig. 7 is a schematic, isolated, perspective view of the body of the plug.
Fig. 8 is an isolated, bottom plan view of the body of the plug.
Fig. 9 is a schematic, isolated, top plan view of the body of the plug.
Fig. 10 is an isolated, cross-sectional view of the body of the plug taken along line 10-10 of Fig. 9.
Fig. 11 is an isolated, cross-sectional view of a plug, wherein the cross-section is taken similarly to that of Fig. 10, and an outlet opening of a body of the plug is closed by a tube of the plug, in accordance with a second embodiment of this disclosure.
Fig. 12 is like Fig. 11, except that the tube is deflected so that the outlet opening of the body of the plug is opened.
Fig. 13 is an isolated, perspective view of a body of a plug, in accordance with a third embodiment of this disclosure.
Fig. 14 is like Fig. 1, except that it further shows a supply assembly for supplying liquid under pressure to the injector.
Fig. 15 illustrates a compound drill bit, in accordance with an embodiment of this disclosure.

### DETAILED DESCRIPTION

Certain exemplary embodiments of this disclosure are described below and illustrated in the accompanying figures. The embodiments described are only for purposes of illustrating the present invention and should not be interpreted as limiting the scope of the invention, which, of course, is limited only by the claims below. Other embodiments of the invention, and certain modifications and improvements of the described embodiments, will occur to those skilled in the art and all such alternate embodiments, modifications, and improvements are within the scope of the present invention.

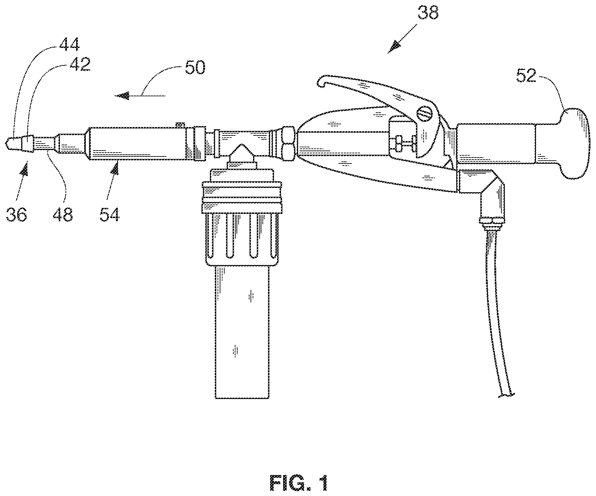

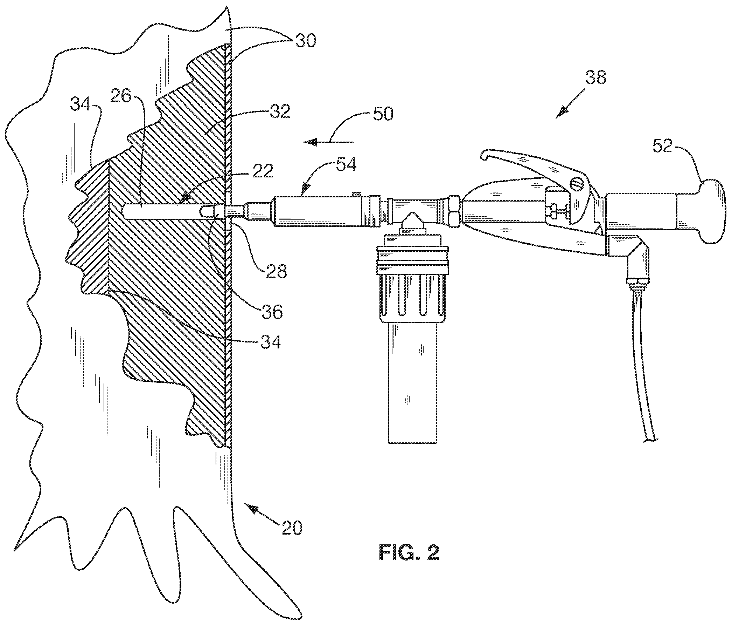

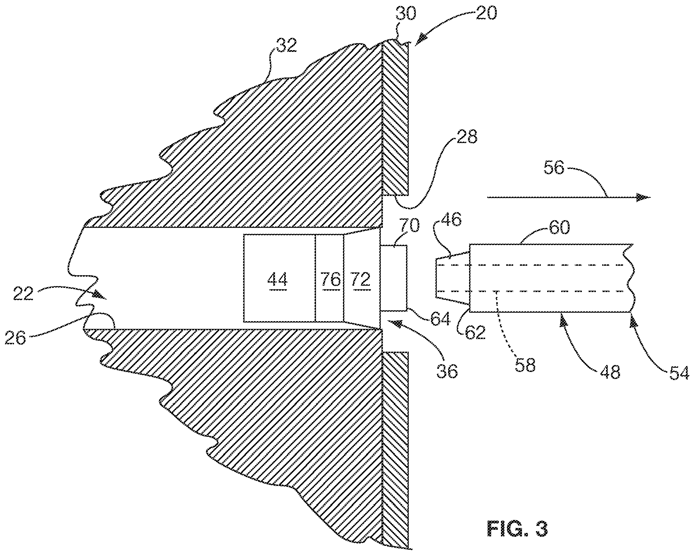

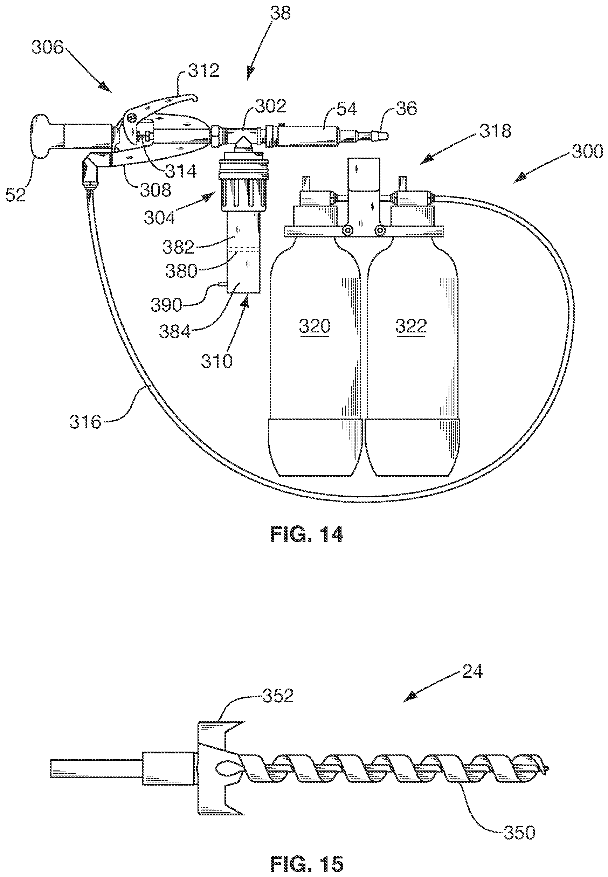

An example of a method of injecting a liquid into a tree trunk 20 is described in the following, at least initially with reference to Figs. 1-3, in accordance with a first embodiment of this disclosure. For example, the injected liquid may be one or more of insecticides, fungicides, fertilizers and/or other liquids that are suitable for being injected into trees. Initially, an elongate borehole 22 may be formed in the tree trunk 20 in any suitable manner, such as with one or more suitable drill bits. Depending upon the size of the tree, there may be several of the boreholes 22 in the tree. An example of a suitable compound drill bit 24 that may be used to form the borehole 22 is discussed below with reference to Fig. 15. Whereas the borehole 22 may be in the form of a single, generally cylindrical borehole, or a hole in any other suitable configuration, the borehole is shown in Figs. 2 and 3 as being a compound borehole having coaxial, cylindrical inner and outer portions or holes 26, 28. The outer hole 28 is typically shorter than, and wider than, the inner hole 26. In the illustrated embodiment, the outer hole 28 extends completely and solely through the layer of bark 30 of the trunk 20, and the inner hole 26 extends deep into the sapwood 32 of the trunk, and the inner hole 26 extends almost completely through the layer of sapwood 32 and ends just short of the heartwood 34 (Fig. 2) of the tree trunk 20.

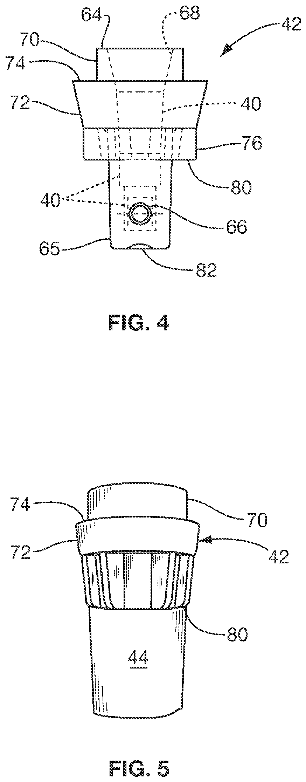

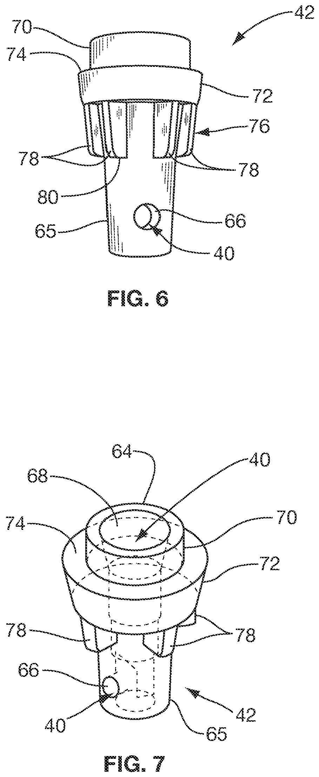

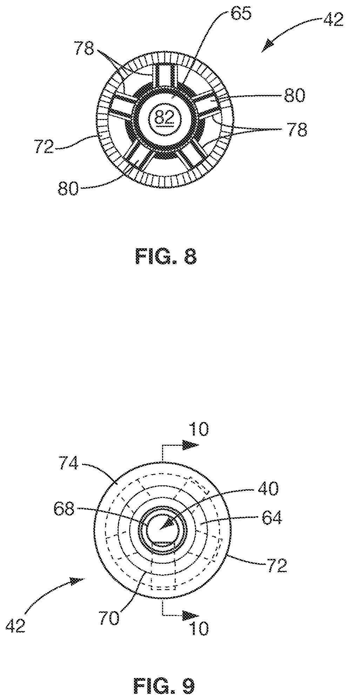

The borehole 22 may vary, such as depending upon characteristics of the tree being treated, and the treatment being applied to the tree by way of a system that includes a plug 36 and an injector assembly 38. The plug 36 is discussed in detail below with reference to Figs. 4-10, and the injector 38 is discussed in detail below with reference to Fig. 14, after the following further discussion of the borehole 22 and an example of a method of injecting liquid into the borehole 22.

The outer portion 28 of the borehole 22 is optional and may be omitted, or may be of different depths, such as depending upon the thickness of the trunk's layer of bark 30. In some applications, a portion of the tree's bark 30 may be shaved away or otherwise removed, such as by using the compound drill bit 24 (Fig. 15) in an effort to assure that the plug 36 can be placed in the outer part of the trunk's sapwood 32 in order to seal the sapwood from the outside. When the bark 30 is thick, it may be desirable for the borehole 22 to include the outer portion 28 in an effort to assure that the plug 36 is fully mounted within the sapwood 32, in an effort to prevent any of the injected liquid from flowing between, and forming a pocket between, the bark and the sapwood.

In one specific example: the borehole 22 and/or the inner portion 26 of the borehole may have a length from eight to ten centimeters, or more generally from about eight to about ten centimeters; the inner portion 26 of the borehole may have a diameter of ten millimeters, or more generally about ten millimeters; the widest portion of the plug 36 may have a diameter of eleven millimeters, or more generally about eleven millimeters; and the optional outer hole 28 may have a diameter of thirty-five millimeters, or more generally about thirty-five millimeters. Typically boreholes 22 do not extend into the heartwood 34, although an occasional borehole may extend into the heartwood since it may be difficult to judge the location of the transition between the sapwood 32 and the heartwood.

With continued reference to Figs. 1-3, the outer end of the inner hole 26 is sealed closed by fixedly seating the plug 36 therein. In accordance with the first embodiment, the plug 36 may be fixedly mounted in the outer end of the inner hole 26 using the injector 38. More specifically, an upstream end of the plug 36 and the tip 46 (Fig. 3) of a discharge nozzle 48 of the injector 38 may be releasably mated together so that the plug is positioned on the nozzle as shown in Figs. 1 and 2. Even more specifically, the plug 36 may optionally be manually, releasably mounted to the tip 46 (Fig. 3) of the nozzle, such as by way of an interference fit between the upstream end of the plug and the outer surface of the tip of the nozzle. This interference fit may more specifically be formed at least partially by way of face-to-face contact between an inner surface of a head 70 (Figs. 4-7) of the plug 36 and the outer surface of the nozzle's tip 46. Then, the plug 36 may be introduced into the borehole 22 while the plug 36 is mounted on the tip 46 of the nozzle 48, and the plug 36 may be mounted in the outer end of the inner hole 26 while the plug is mounted on the tip of the nozzle, by moving the injector 38 along the axis of the borehole toward the tree trunk 20. More specifically, the injector 38 as a whole may be moved along the axis of the borehole toward the tree trunk 20 in order to introduce and mount the plug 36 in the borehole 22. This movement of the injector 38 with the plug 36 mounted on the tip 46 of the nozzle 48 is schematically represented by an arrow designated by numeral 50 in Figs. 1 and 2. More specifically and in accordance with one specific example, the movement 50 of the injector 38, with the plug 36 mounted to its tip 46, along the axis of the borehole 22 may result in substantially simultaneously introducing both the plug and at least the tip 46 of the nozzle 48 into the borehole 22, wherein the tip does not extend through the plug and the tip is preferably, although optionally, fully covered by the plug for barrier purposes, as will be discussed in greater detail below.

This moving 50 of the injector 38, with the plug 36 mounted thereto, includes moving the nozzle 48 at least closer to an inner end of the inner hole 26. More specifically, the injector 38 may be used to push the plug 36 at least farther into the borehole 22 while the plug is mounted on the tip 46 of the nozzle 48. In accordance with one acceptable example, respective features of this disclosure may be cooperatively configured so that the plug 36 may be both introduced into the borehole 22 and mounted within the inner hole 26 with a single, forward stroke 50 (Fig. 2) of the injector 38 along the axis of the borehole. In one example, this moving / pushing of the plug 36 with the injector 38 may be carried out by a user holding the injector 38 while the plug 36 is mounted to the tip 46, and the user thrusting 50 the injector inwardly / forwardly along the axis of the borehole 22. As a more specific example, one of the user's hands may be pushing forwardly on a knob-like handle 52 mounted to the rear of the injector 38, and the user's other hand may be holding and urging forwardly a barrel 54 of the injector, wherein the nozzle 48 is at the free end of the barrel. The injector 38 and associated liquid supply assembly 300 (Fig. 14) may be configured differently than described above. For example, the handle 52 may be arranged differently or may include an access hole for an adjustment screw for the inner valve assembly (at least partially positioned in 302 (Fig. 14)), and various bars, levers, handles, belt clips or other mechanisms may be incorporated into or otherwise associated with the injector 38 and/or assembly 300 for aiding the handling of the injector and/or in the forcing of the plug 36 into the borehole, or the like, if desired.

The movement 50 of the injector 38, with the plug 36 mounted to its tip 46, along the axis of the borehole 22 may be translational. For example, twisting or rotational movement may not be required for mounting the plug 36 in the borehole 22. Alternatively some twisting or rotational movement may occur; and if desired or helpful, twisting or rotational movement may optionally be utilized while the injector 38 is used to mount of the plug 36 in the borehole 22. Accordingly, the movement 50 of the injector 38, with the plug 36 mounted to its tip 46, along the axis of the borehole 22 may be characterized as being substantially translational.

The outer hole 28 being wider than the inner hole 26 may allow a user to visually verify when the plug 36 is properly mounted in the sapwood 32 / the outer end of the inner hole 26. In accordance with the first embodiment, the plug 36 is mounted in the outer end of the inner hole 26 by way of an interference fit that seals the outer end of the inner hole, as will be discussed in greater detail below.

With the plug 36 fixedly mounted in the outer end of the inner hole 26 and the outer surface of the tip 46 of the nozzle 48 sealingly in seated contact with the upstream end of the plug as at least schematically shown in Fig. 2, the injector 38 may be used to inject liquid into the inner portion of the inner hole 26 by way of the plug 36. More specifically, the outer surface of the tip 46 may be sealingly in seated contact with the head 70 (Figs. 4-7) of the plug 36. In this regard, the tip 46 of the nozzle 48 of the injector 38 may be characterized as being a discharge portion of the injector or its nozzle, since the tip 46 is for discharging the liquid from the end of a passageway 58 (Fig. 3) that extends through the injector's barrel 54. The discharge passageway 58 is hidden from view in Fig. 3; therefore, it is schematically illustrated by dashed lines in Fig. 3. The sealing, seated contact defined between the nozzle's tip 46 and the upstream end of the plug 36 may be at least partially provided by way of the optional interference fit between the upstream end of the plug and the nozzle's tip, continued pushing of the nozzle's tip against the upstream end of the plug, and/or by any other suitable features or techniques.

More specifically, while the plug 36 is fixedly mounted in and sealing the outer end of the inner hole 26, and the outer surface of the tip 46 of the nozzle 48 is in sealing, seated contact with the upstream end of the plug, the injector 38 may be used to inject liquid into an upstream portion of at least one passageway 40 (Figs. 4, 6, 7, 9 and 10) that is at least partially defined by the plug 36, so that the injected liquid flows from a downstream portion of the passageway 40 into the inner portion of the inner hole 26. In a more specific example, while the plug 36 is mounted in, and seals, the outer end of the inner hole 26, and the plug is snugly mounted on the tip 46 of the nozzle 48 by way of an interference fit, the injector 38 may be operated so that it discharges the liquid from the tip 46 of the nozzle 48 into the upstream end of the passageway 40 that extends through the plug 36. In accordance with the first embodiment of this disclosure, the injector's tip 46 is neither in the form of a needle nor has a needle mounted thereto, such that the injecting into the borehole 22 may be characterized as being needleless injection. In an alternate embodiment, the injector tip 46 is fitted with an injector needle suitable for injecting palm trees or the like.

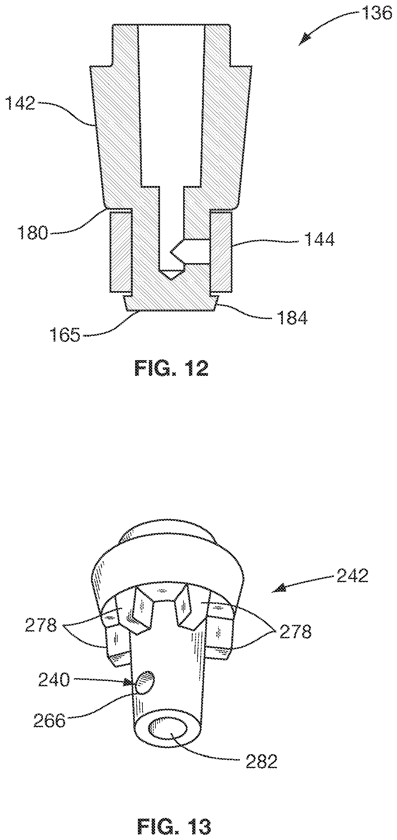

In accordance with the first embodiment, the plug 36 includes a body 42 (Figs. 3-10) that defines the passageway 40 (Figs. 4 and 6-10), and the plug further includes at least one selectively operative obstructing mechanism for selectively allowing and restricting flow of the liquid through the plug. The selectively operative obstructing mechanism may be in the form of a check valve comprising an elastic tube 44 (Figs. 3 and 5) that selectively expands to an expanded configuration (e.g., see tube 144 in Fig. 12) to open the downstream portion of the passageway 40 to allow the liquid to flow from the passageway and into the inner portion of the inner hole 26 in response to a predetermined pressure differential defined across the tube 44. The predetermined pressure differential may be provided by the injector 38 injecting the liquid into the upstream portion of the passageway 40.

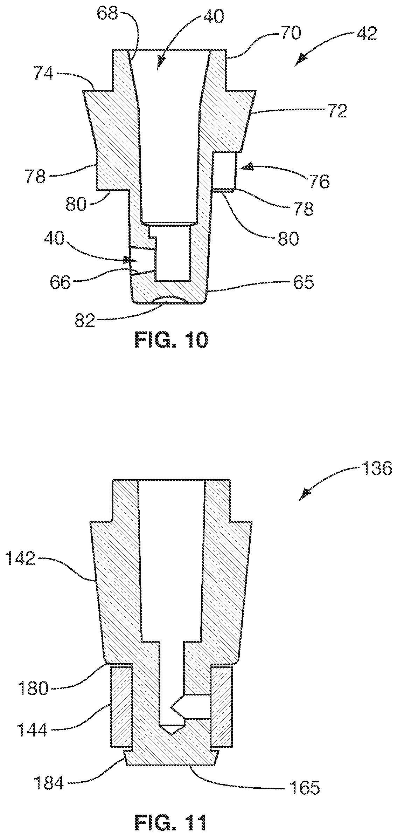

When the predetermined pressure differential ceases to exist or otherwise is not present, the tube 44 is in its contracted configuration (e.g., see tube 144 in Fig. 11) and thereby closes the downstream portion of the passageway 40 so that the injected liquid is contained in the inner portion of the inner hole 26 in a manner that seeks to prevent the liquid from exiting the inner hole by way of the plug 36, as will be discussed in greater detail below. For example, the predetermined pressure differential typically is not present while the injector 38 is not injecting the fluid. The plug 36 typically seals the injected liquid in the closed, inner portion of the inner hole 26 until the injected liquid is drawn upwardly in the sapwood 32 of the tree.

Immediately or any time after injecting the liquid, the injector 38, namely the tip 46 of its nozzle 48, may be withdrawn from the plug 36 while the plug remains fixedly mounted within the outer end of the inner hole 26. The injector 38 may be withdrawn from the plug 36 by moving the injector along the axis of the borehole 22, away from the tree trunk 20. In this regard, the injector 38 as a whole may be moved along the axis of the borehole 22, away from the tree trunk 20. This movement is schematically represented by an arrow designated by numeral 56 in Fig. 3. The movement 56 of the injector 38 along the axis of the borehole 22 may be translational. For example, twisting or rotational movement may not be required for withdrawing the tip 46 of the nozzle 48 from the plug 36 and the borehole 22. Alternatively some twisting or rotational movement may occur; and if desired or helpful, twisting or rotational movement may optionally be utilized while moving 56 the injector 38 along the axis of the borehole 22. Accordingly, the movement 56 of the injector 38 along the axis of the borehole 22 may be characterized as being substantially translational. Advantageously, the plug 36 may optionally remain installed in the borehole 22 for subsequent treatments with the injector 38 by way of the plug. In accordance with one acceptable example, respective features of this disclosure may be cooperatively configured so that the tip 46 of the injector 38 may be removed from the plug 36 by way of a single, rearward stroke 56 of the injector 38 along the axis of the borehole 22, such that the plug 36 is unmoved and remains fixedly mounted within the upper end of the inner hole 26. Alternatively, in some situations the plug 36 may move slightly, but any such slight movement may be considered to be unsubstantial because the plug 36 will typically remain in a suitable fixedly mounted and fully seated configuration within the outer end of the inner hole 26.

As mentioned above, the plug 36 may optionally be releasably mounted to the tip 46 of the injector's nozzle 48 by way of an interference fit between the upstream end of the plug and the tip of the nozzle. In accordance with the first embodiment, the moving 56 of the injector 38 away from the tree trunk 20 along the axis of the borehole 22 results in tip 46 of the nozzle 48 becoming disconnected from the plug 36 by overcoming the interference fit between tip and the upstream end of the plug. More specifically, the injector 38 may be simultaneously pulled 56 away from both the tree trunk 20 the plug 36 fixedly mounted within the borehole 22. In one example, this pulling 56 may be carried out by a user holding the injector 38 while the plug 36 is mounted to both the borehole 22 and the tip 46, and pulling 56 the injector away from the tree trunk 20 along the axis of the borehole 22. As a more specific example, one of the user's hands may be pulling rearwardly on the knob-like handle 52 mounted to the rear of the frame of the injector 38, and the user's other hand may be holding and urging the barrel 54 of the injector rearwardly. The handle 52 may be arranged differently, and bars, levers or other mechanisms may be incorporated into or otherwise associated with the injector 38 for aiding in the pulling and/or pushing of the injector away from the plug 36 and the tree trunk 20, if desired.

Reiterating from above and in accordance with one version of the first embodiment, the plug 36 is mounted in the borehole 22 by way of an interference fit, and the plug is mounted to the injector's tip 46 by way of another interference fit. These interference fits are cooperatively coordinated with one another so that the strength of the interference fit between the plug 36 and the outer end of the inner hole 26 exceeds the strength of the interference fit between the plug and the injector's tip 46, so that the plug remains fixedly mounted within the borehole 22 when the injector 38 is withdrawn from the plug and the tree trunk 20. Alternatively, the interference fit between the plug 36 and the injector's tip 46 may be omitted, so that the plug is more loosely associated with (e.g., loosely positioned on) the injector's tip 46 while the injector is used to at least further install the plug in the borehole 22. For example, the plug 36 may be manually held against or otherwise releasably associated with or connected to the tip 46 while the plug is introduced into the borehole 22. That is and alternatively, the plug 36 may be releasably positioned on the nozzle's tip 46 by way of any suitable fastening mechanisms.

In accordance with the first embodiment, the optional interference fit by which the upstream end of the plug 36 is releasably mounted to the tip 46 of the injector's nozzle 48 and/or the contact between the upstream end of the plug 36 and the nozzle's tip by which the injector 38 may force the plug at least farther into the borehole may be provided by way of at least one surface of the injector and at least one surface of the plug being mutually, cooperatively configured with respect to one another. These mutually, cooperatively configured surfaces, as well as other surfaces and features of this disclosure, may have any suitable configurations and are not intended to be limited to those configurations disclosed herein. For example, this disclosure is not limited to the frustoconical shapes discussed below.

Referring to Fig. 3 and in accordance with the first embodiment, the optional interference fit between the plug 36 and the injector's tip 46 is provided in part by a frustoconical exterior surface of the tip. The frustoconical exterior surface of the tip 46 may be coaxial with the injector's discharge passageway 58 that extends through the barrel 54 of the injector 38 and ends at a discharge opening defined by the tip. The barrel 54 (Figs. 1 and 2) of the injector 38 may taper down to the nozzle 48 in a step-like fashion. With continued reference to Fig. 3, the nozzle 48 of the first embodiment includes a cylindrical section 60, and the transition between the cylindrical section 60 and the tip 46 may optionally be in the form of an annular shoulder 62 that may optionally be for engaging against a corresponding annular face 64 (Figs. 4, 5, 7 and 9) of the plug's body 42 while the tip is mated with the upstream end of the plug 36. For example, the nozzle's shoulder 62 may be engaged to, and apply force against, the body's face 64 while the injector's tip 46 is being forced against the upstream end of the plug 36.

As mentioned above, the plug's passageway 40 may be defined within the plug's body 36. Much of the passageway 40 is hidden from view within the body 36 in Fig. 4; therefore, the passageway is schematically illustrated by dashed lines in Fig. 4. Whereas the passageway 40 could include more than one laterally positioned outlet opening 66, in the first embodiment there is a single outlet opening 66 formed in the body's tip 65. Alternatively, there may be a series of outlet openings 66, and they may be spaced apart around the axis of the body 42.

The passageway 40 extends from the outlet opening 66 to at least one inlet opening 68 that is at least partially defined in a head 70 of the body 42. In accordance with the first embodiment, the inlet opening 68 may be characterized as being frustoconical / is defined by an inner surface of the body 42 that is frustoconical and at least partially provides at least some of the engagement between and/or the releasable interference fit between the upstream end of the plug 36 and the injector's tip 46 by being in opposing face-to-face contact with the frustoconical outer surface of the tip 46. The engagement between the injector's tip 46 and the upstream end of the plug 36 may be characterized as being a male-female type of engagement. Alternatively or additionally, the engagement between the injector's tip 46 and the upstream end of the plug 36 may comprise a female-male type of engagement. As a more specific example, a portion of the body 42 may fit into a portion of the nozzle 48.

In accordance with the first embodiment, the interference fit by which the plug 36 is fixedly mounted in the borehole 22 is provided by way of the at least generally cylindrical surface of the sapwood 32 that defines the outer end of the inner hole 26 and at least one surface of the plug being configured for providing the interference fit therebetween. These mutually configured surfaces may have any suitable shape and are not intended to be limited to the shapes discussed herein. In this regard and with reference to Fig. 4, the body 42 includes a rim 72 that extends outwardly from the head 70 and may be separated from the head by an annular shoulder 74. In accordance with the first embodiment, the interference fit between the plug 36 and the outer end of the inner hole 26 in the tree trunk 20 is provided between a frustoconical exterior surface of the body's rim 72 and the at least generally cylindrical surface of the sapwood 32 that defines the outer end of the inner hole 26. The widest portion of the rim 72 may have a diameter of eleven millimeters, or more generally about eleven millimeters. Referring to Figs. 2 and 3 and in accordance with the first embodiment, at least the body's rim 72 is within the inner hole 26 for providing the interference fit between the plug 36 and the borehole 22. Also, the injector 38 may be used to push the plug 36 farther into the borehole 22 than shown in Figs. 2 and 3, so that the head 70 is flush with the sapwood 32. In accordance with one acceptable example, respective features of this disclosure may be cooperatively configured so that the plug 36 may be both introduced into the borehole 22 and pushed to a position so that the head 70 is flush with the sapwood 32 with a single, forward stroke 50 (Fig. 2) of the injector 38 along the axis of the borehole.

As shown in Fig. 4, the body 42 includes an intermediate section 76 adjacent the narrow end of the rim 72. On the one hand, the intermediate section 76 may be cylindrical as generally shown in Fig. 4. On the other hand, the intermediate section 76, like the other sections of the body 42 and other features of this disclosure, may be in any suitable configuration. For example, the intermediate section 76 may be characterized as being schematically, generally shown in Fig. 4, because the intermediate section may more specifically comprise / be in the form of a series of spaced apart, tapered ribs 78 or other guiding features that are spaced apart around, and extend along, the axis of the body 42, as at least schematically shown in Figs. 5-9. Shoulder(s) 80 defined by the intermediate section 76 and/or ribs 78 engage an end of the tube 44 to restrict movement of the tube along the axis of the body 42, such as when the plug 36 is being mounted in the borehole 22.

In the first embodiment, the body's tip 65 is positioned in the tube 44, and the outer cylindrical surface of the body's tip 65 and the inner cylindrical surface of the tube 44 have approximately the same diameter, so that the tube 44 closes the outlet opening 66 and there is an interference fit between the tube and the body's tip while the tube is in its contracted configuration (e.g., see Fig. 11). That is and in accordance with the first embodiment, the body's tip 65 has an at least generally cylindrical outer surface that extends around the body's longitudinal axis and defines the outlet opening 66, and the tube 44 extends around the body's tip so that the inner surface of the tube is in opposing face-to-face relation with, or more specifically in opposing face-to-face contact with, the outer surface of the body's tip and the outlet opening at least while the tube is in its contracted configuration.

Referring more specifically to the passageway 40 of the first embodiment: an upstream portion of the passageway 40 extends along the longitudinal axis of the body 42, from the inlet opening 68 / open end of the body 42 toward the opposite closed end of the body 42; the outlet opening 66 is positioned between the opposite open and closed ends of the body 42; and a downstream portion of the passageway 42 extends in a lateral direction, which is crosswise to the longitudinal axis of the body 42, from the upstream section of the passageway 40 to the outlet opening 66. That is and in accordance with the first embodiment, whereas the closed end of the body 42 may include a dimple-like artifact 82 resulting from a molding process by which the body may be manufactured, or the like, that artifact is not open to the passageway 40, such that the closed end of the body is permanently closed off from the passageway 40. At least partially as a result and advantageously, when the injector 38 is used with plug 36 as described above, the potential for at least some types of cross-contamination between different trees may be reduced, may be substantially eliminated, and/or may be completely eliminated. More specifically, the injector's tip 46 only extending into the upstream portion of the passageway 40 in combination with the selective opening and closing of the outlet opening 66 by way of the tube 44 seeks to prevent the injector's tip 46 or nozzle 48 from being contaminated, such as by restricting any contact between the injector's tip 46 and the borehole 22, and restricting any backflow through the plug 36.

Referring to Figs. 4 and 5 and in accordance with the first embodiment, the plug's body 42 may be molded, as a whole, from a polymeric material such as polyamide or the like, and the tube 44 may be formed separately from the body and then be mounted to extend around the cylindrical tip 65 of the body. The passageway 40 may be formed within the body 42 during molding of the body and/or the passageway 40 may be bored into the precursor of the body 42 after it is molded. The tube 44 may be extruded from an elastomeric polymer material so that the tube is more flexible than the body 42, so that the tube may transition between its above-discussed contracted and expanded configurations (e.g., see Figs. 11 and 12). For example, the tube 44 may be formed from a latex polymer or any other suitable material. Alternatively, the plug's body 42, and perhaps also the tube, may be formed from, or at least partially formed from, bio-derived or biodegradable polymeric material(s) such as, but not limited to, those derived from natural materials such as vegetable oil, soy, wood, other cellulosic materials and the like.

A variety of differently configured features are within the scope of the present invention. For example, a second embodiment of this disclosure may be like the first embodiment, except for variations noted and variations that will be apparent to one of ordinary skill in the art. Due to the similarity, components of the second embodiment that are identical, similar and/or function in at least some ways similarly to corresponding components of the first embodiment have reference numbers incremented by 100.

Figs. 11 and 12, respectively show the tube 144 of the plug 136 of the second embodiment in its contracted and expanded configurations. Movement of the tube 144 along the length of the body 142 may be restricted between the shoulder 180 and an annular flange 184 extending outwardly from the free end of the body's tip 165. The body 42 of the first embodiment may similarly include a flange proximate the free end of its tip 65, or one or more other features for interacting with the tube 44, such as for restricting axial movement of the tube.

As another example, a third embodiment of this disclosure may be like the first embodiment, except for variations noted and variations that will be apparent to one of ordinary skill in the art. Due to the similarity, components of the third embodiment that are identical, similar and/or function in at least some ways similarly to corresponding components of the first embodiment have reference numbers incremented by 200. As an example of a difference between the plugs of the first and third embodiments, the body 242 shown in Fig. 13 may have shorter ribs 278, and the artifact 282 may be larger. The artifact 282 may nonetheless be closed off from, and thereby not in direct fluid communication with, the outlet opening 266 or the rest of the passageway 240.

Referring primarily to Fig. 14, one example of a suitable injector 38 and an associated liquid supply assembly 300 will be described in the following, in accordance with the first embodiment of this disclosure, although any suitable injector and/or liquid supply assembly may be used. In the illustrated embodiment, the injector 38 includes a T-joint 302 mounted between the barrel 54, a dosing assembly 304 and a trigger assembly 306. Alternatively or more generally, the trigger assembly 306 may be replaced with, or be in the form of, any suitable actuation assembly, and the actuation assembly may include any suitable user interface, such as a button, lever, trigger, or the like, for being operated by the user to initiate injection of the liquid. The handle 52 may be mounted to or arranged proximate the rear end of the trigger assembly 306, and a liquid intake assembly 308 may be positioned below the trigger assembly. One or more of, or portions of, the T-joint 302, barrel 54, dosing assembly 304, trigger assembly 306 and intake assembly 308 may be characterized as at least partially forming a frame of the injector 38 and/or one or more of these features may be characterized as being mounted to the frame of the injector.

The dosing assembly 304 comprises a container 310 for containing the liquid that is discharged from the nozzle's tip 46 (Fig. 3) in response to a trigger 312 of the trigger assembly 306 being squeezed or otherwise activated, or the like. In this regard, a conventional inner valve assembly (not shown) may be positioned at least partially in the T-joint 302, and the inner valve assembly may be actuated by movement of linkage(s) 314 in response to the trigger 312 being moved between an upper position (Fig. 14) and lower position (not shown). For example, the trigger 312 may be pivotably mounted and biased or otherwise urged by one or more springs, or the like, into the upper position, and the trigger may be manually squeezed, or otherwise moved, into the lower position.

As alluded to above, the inner valve assembly is operative so that the liquid from the dosing assembly 304 is discharged from the nozzle's tip 46 (Fig. 3) in response to the trigger 312 being moved to its lower position. In addition, the inner valve assembly is operative so that the dosing assembly 304 is replenished with liquid from the liquid supply assembly 300 by way of a supply tube 316 and the intake assembly 308 in response to the trigger 312 being moved from its lower position to its upper position.

In accordance with the first embodiment, the liquid supply assembly 300 includes a manifold assembly 318 from which the supply tube 316 extends and to which upstream and downstream containers 320, 322 are mounted. The supply tube 316 and containers 320, 322 are respectively in communication with one another by way of the manifold assembly 318 so that pressurized gas is supplied from the upstream (pressure chamber) container 320 to the downstream (product chamber) container 322, to force liquid from the downstream container to flow through the supply tube 316, intake assembly 308 and inner valve assembly to the dosing assembly 304 in response to the trigger 312 being moved from its lower position to its upper position. For example, the pressurized gas in the downstream container 322 may be positioned above the liquid in the downstream container, to force the liquid in the downstream container to flow upwardly through a tube (not shown) that is within the downstream container and supplies the liquid under pressure to the upstream end of the supply tube 316. Alternatively, the upstream container 320 and the manifold assembly 318, or a respective portion of the manifold assembly, may be omitted, in which case the downstream container 322 may initially contain less of the liquid and more of the pressurized gas. In contrast, both of the containers 320, 322 may be used in order to increase the number of treatments that can be carried out between refills.

In one embodiment, the manifold assembly 318 can be adapted with a thumb valve positioned between the upstream and downstream containers. This configuration allows for removal of the downstream container from the manifold for product refill, etc. without losing pressure from the upstream container when the thumb valve (not shown) is in a closed configuration. The valve can be returned to an open position once the downstream container has been reconnected to the manifold. In another embodiment, the manifold assembly 318 is adapted with a safety valve that automatically closes if the supply tube 316 is inadvertently detached from the manifold to reduce leakage of product and pressure loss.

The dosing assembly 304 may be configured to receive a predetermined, adjustable volumetric dose of the liquid from the liquid supply assembly 300 in response the actuation of the inner valve assembly that occurs in response to the trigger 312 being moved from its lower position to its upper position. More specifically and in one embodiment, the dose supplied from the dosing assembly 302 may be increased or decreased by making one or more suitable adjustments. For example, the chamber within the container 310 of the dosing assembly 304 may contain an inner, movable partition 380 that sealingly divides the chamber into inner, upper and lower subchambers 382, 384. The partition 380 and subchambers 382, 384 are hidden from view in Fig. 14; therefore, they are at least partially, schematically illustrated by dashed lines. For example, the partition 380 may be a piston, diaphragm or any other suitable structure that is positioned in the container 310 for at least partially defining the subchambers 382, 384, and is also for moving at least partially along the length of the container to inversely vary the size of the subchambers 382, 384 with respect to one another.

In accordance with the first embodiment, it is the upper subchamber 382 that is selectively, alternately in fluid communication with the passageway 58 (Fig. 3) and the liquid supply assembly 300 by way of the inner valve assembly (not shown, but optionally positioned in the T-joint 302). That is, the upper subchamber 382 is for alternately providing a dose of the liquid to the passageway 58, and receiving the next dose of liquid from the liquid supply assembly 300, and for repeating this sequence numerous times. Whereas the upper subchamber 382 is for alternatively receiving and providing the doses, the lower subchamber 384 is for cooperatively interacting with the upper subchamber for at least partially facilitating the filling of a dose into, and the discharging of a dose from, the upper subchamber. The lower subchamber 384 may also at least partially facilitate the making of adjustments to the volumetric size of the doses. For example, the lower subchamber may contain one or more springs and/or other biasing features, such as gas under pressure, that bias the partition 380 in a manner that at least partially sets the volume of the liquid to be received in the upper subchamber 382. For example, an adjustable ring or other suitable features may be included for adjusting the force applied by the spring(s) and/or a valve may be provided for supplying / adjusting the gas pressure in the lower subchamber 384. Similarly, a supply valve may be provided in the manifold assembly 318 for supplying the gas pressure in the upstream container 320. Suitable supply valves of the dosing assembly 304 and the liquid supply assembly 300 may be, or may be somewhat like, pneumatic tire valves, which may be referred to as Schrader brand valves. Any other suitable valves, or the like, may be used.

More specifically referring to the version of the first embodiment in which the lower subchamber 384 includes gas under pressure, a supply valve 390 for supplying the gas to, or adjusting the gas pressure within, the lower subchamber is schematically shown in Fig. 14. For example, the supply valve 390 may be mounted to, and at least partially protected by, an end cap or flange at the lower end of the container 310, or the supply valve 390 may be in any other suitable location in which it may be in fluid communication with the lower subchamber 384.

Whereas the gas pressure within the lower subchamber 384 may be adjusted by way of the supply valve 390, the lower subchamber 384 is sealed closed in a manner such that gas typically is not leaked from the lower subchamber, so that numerous doses of the liquid may be injected by the injector 38 at about the same pressure without using the supply valve 390 to adjust the gas pressure or replenish gas within the lower subchamber. On the other hand, when it is desired to adjust the pressure at which the liquid is discharged by the ejector 38, the pressure at which the liquid is discharged by the ejector 38 may be adjusted by using the supply valve 390 to adjust the pressure within the lower subchamber 384. For example, using the supply valve 390 to increase the pressure within the lower subchamber 384 may result in the liquid being discharged by the ejector 38 at a higher pressure, and using the supply valve 390 to decrease the pressure within the lower subchamber 384 may result in the liquid being discharged by the ejector 38 at a lower pressure. On the other hand, the pressure at which the liquid is discharged from the liquid supply assembly 300 via supply tube 316 to the intake assembly 308 of ejector 38 may also be adjusted by changing the pressure within the containers 320, 322 of the liquid supply assembly 300, for example, by way of one or more supply valves.

In one example, the partition 380 and upper and lower subchambers 382, 384 are cooperative so that each dose of liquid that is discharged by the ejector 38 is supplied at above atmospheric pressure and at a sufficiently constant pressure so as to both transition the elastic tube 44 to its expanded configuration and force at least some of the dose into the sapwood 32 or living and/or active xylem of the tree. In one embodiment, for each dose, the pressure at which the liquid is discharged by the ejector 38 remains substantially constant throughout the discharging of substantially the entire dose. In one embodiment, the discharge pressure is about four bars for pine trees or conifers, and about two to three bars for other trees, such as broadleaf (2 bars), deciduous trees or palm trees (2 bars). For example, when the upper subchamber 382 is fully charged with a dose of the liquid, the pressure within upper subchamber may be about two to three bars, or about four bars. The pressure within the containers 320, 322 would typically be greater, so as to facilitate a suitable and rapid recharging of the upper subchamber 382. In one example, the pressure within the containers 320, 322 may be about eight bars, and the liquid may be dispensed by the injector 38 in a range of about two bars to about four bars.

In accordance with one aspect of this disclosure, at least the pressurized gas in the lower subchamber 384 is cooperatively associated with the upper chamber 382, such as by way of the partition 380, so that the upper chamber is alternately for receiving the liquid from the liquid supply assembly 300 and providing the liquid to nozzle 46 (Fig. 3) under pressure, and this alternate receiving and providing may occur numerous times in rapid succession. Accordingly, the injector 38 may be used to rapidly install numerous of the plugs 36 in series, with a dose of the liquid being injected with each installation, and each dose may be supplied at a generally or substantially constant pressure. Notwithstanding, numerous variations are within the scope of this disclosure.

Whereas examples of the injector 38 have been described relatively specifically in the foregoing, the injector may more generally be any type of injector that is suitable for interacting in accordance with this disclosure with the plugs (e.g., plug 36) of this disclosure. As a more specific example, the T-joint 302 with its internal valve assembly, trigger assembly 306 and intake assembly 308 may be from a Meterjet Gun Assembly No. 23623-31-1/4F available from Spraying Systems Co. of Wheaton Illinois. More specifically and in accordance with an alternative embodiment, a suitable injector may be provided by mounting a nozzle 48, barrel 54 or other suitable tip to the front end of a Meterjet Gun Assembly No. 23623-31-1/4F, and optionally a handle 52 or other suitable structure may also be mounted to the Gun Assembly, such as at the rear end of the Gun Assembly.

As at least alluded to above, the borehole 22 (Figs. 2 and 3) may be formed in any suitable manner, such as by using a first drill bit for forming the inner hole 26 (Figs. 2 and 3), and then using a second drill bit to form or further form the outer hole 28 (Figs. 2 and 3), or vice versa. In accordance with the first embodiment, the forming of the borehole 22 may optionally be streamlined by using a compound drill bit, such as the compound drill bit 24 shown in Fig. 15. The compound drill bit 24 includes both an outer bit 350 and an inner bit 352 that are coaxially fixedly connected to the shame shaft. The outer bit 350 is for forming the inner hole 26 and the central portion of the outer hole 28, and the inner bit 352 is for completing formation of the outer hole 28. The inner bit 352 is shorter than, and wider than, the outer bit 350. As one specific example shown in Fig. 15, the outer bit 350 may be in the form of an auger bit, and the inner bit 352 may comprise cutting edge(s) like those of a Forstner bit, countersink bit and/or router bit that is for forming a cylindrical hole, or the like. As another example, the compound drill bit 24 may be in the form of a Forstner bit and/or countersink bit that is formed in combination with a narrower, more elongate bit, wherein the Forstner or countersink bit portion is configured for forming a cylindrical hole. Alternatively, differently shaped holes and bits are within the scope of this disclosure.

In one example of a method of this disclosure, a determination is made of how many boreholes 22 are to be included in the trunk 20 of a tree, then the boreholes are formed in the tree trunk with the compound drill bit 24, and then the plugs 36 are mounted in the boreholes and the liquid is injected into the boreholes using the injector 38 as described above. A suitable number of boreholes can be determined by following the label directions for use of the particular product to be injected, such as by calculating the tree diameter at breast height (DBH; 1.3 M above the ground) measured in cm. The product to be injected may be placed undiluted or diluted (as the case may be) in to the downstream container 322.

Whereas the above-described embodiments have been characterized as being needleless, alternatively the injector 38 may be adapted to include a conventional tree injection needle and to discharge the fluid through the needle. For example, the needle could be mounted to the tip 46 (Fig. 3) (needle not shown).

Although the present invention has been described with exemplary embodiments, it is to be understood that modifications and variations may be utilized without departing from the scope of the invention, as defined in the appended claims.

## Claims

1. A plug (36, 136) for being inserted into a hole (22) in a tree, for use in injecting a liquid into the tree, the plug comprising:
a body (42, 142);
a passageway (40, 240) extending in the body (42, 142);
a plurality of openings (66, 68) to the passageway (40, 240); and
a tube (44, 144) extending around at least a portion of the body (42, 142) and obstructing at least one opening (66) of the plurality of openings, **characterized in that** the tube (44, 144) is elastomeric and configured for opening and closing the at least one opening (66) in response to predetermined pressure differentials.

2. The plug (36) according to claim 1, wherein:
the body (42) includes opposite first and second ends;
the at least one opening is an outlet opening (66) positioned between the first and second ends of the body (42);
the plurality of openings comprises an inlet opening (68) positioned proximate the first end of the body (42);
the passageway (40) comprises
an upstream section that extends along a longitudinal axis, from the inlet opening (68) toward the second end of the body (42); and
a downstream section that extends in a lateral direction, which is crosswise to the longitudinal axis, from the upstream section to the outlet opening (66); and
the tube (44) extends around the longitudinal axis.

3. The plug (36) according to claim 2, wherein the second end of the body (42) is permanently closed off from the passageway (40).

4. The plug (36) according to claim 2, wherein:
the body (42) comprises an outer surface that extends around the longitudinal axis and defines the outlet opening (66); and
the tube (44) extends around the outer surface so that an inner surface of the tube (44) is in opposing face-to-face relation with both the outer surface and the outlet opening (66).

5. A combination of a plug (36) according to claim 1, with an injector (38), wherein:
the at least one opening is an outlet opening (66);
the plurality of openings comprises an inlet opening (68); and
the injector (38) includes a discharge nozzle (48) for mating with the inlet opening (68) and discharging the liquid into the passageway (40) while the discharge nozzle (48) is mated with the inlet opening (68).

6. The combination according to claim 5, wherein at least one surface of the injector (38) and at least one surface of the plug (36) are mutually configured for being cooperatively engaged to one another, and the plug (36) is adapted for being pushed at least farther into the hole (22) by way of the injector (38) while the at least one surface of the injector (38) and the at least one surface of the plug (36) are cooperatively engaged to one another.

7. The combination according to claim 6, wherein the at least one surface of the injector (38) and the at least one surface of the plug (36) are mutually configured for being releasably fastened to one another by way of an interference fit.

8. A method for injecting liquid into a tree, comprising:
mounting a plug (36) in a hole (22) in the tree while the plug (36) is positioned on a discharge nozzle (48) of an injector (38), comprising moving the discharge nozzle (48) closer to an inner end of the hole (22) while the plug (36) is positioned on the discharge nozzle (48);
supplying the liquid into the inner end of the hole (22), comprising discharging the liquid from the discharge nozzle (48) while the plug (36) is in the hole (22) and the plug (36) is positioned on the discharge nozzle (48); and
withdrawing the discharge nozzle (48) from the plug (36) while the plug (36) remains within the hole (22).

9. The method according to claim 8, wherein the mounting of the plug (36) in the hole (22) comprises using the injector (38) to push the plug (36) at least farther into the hole (22) while the plug (36) is positioned on the discharge nozzle (48).

10. The method according to claim 8, wherein the mounting of the plug (36) in the hole (22) comprises both introducing the plug (36) into an outer end of the hole (22) while the plug (36) is positioned on the discharge nozzle (48), and pushing the plug (36) at least farther into the hole (22) while the plug (36) is positioned on the discharge nozzle (48), with a single stroke of the injector (38).

11. A method for injecting liquid into a tree, comprising:
substantially simultaneously introducing both a plug (36) and a discharge portion of an injector (38) into an outer end of a hole (22) in the tree while the plug (36) is positioned on the discharge portion of the injector (38), comprising moving the discharge portion of the injector (38) closer to an inner end of the hole (22) while the plug (36) is positioned on the discharge nozzle (48);
supplying the liquid into the inner end of the hole (22), comprising discharging the liquid from the discharge portion of the injector (38) while the plug (36) and the discharge portion of the injector (38) are within the hole (22) and the plug (36) is positioned on the discharge portion of the injector (38); and
withdrawing the discharge portion of the injector (38) from both the plug (36) and the hole (22) while the plug (36) remains in the hole (22).

## Patentansprüche

1. Stopfen (36, 136) zum Einsetzen in ein Loch (22) in einem Baum zur Verwendung beim Einspritzen einer Flüssigkeit in den Baum, wobei der Stopfen Folgendes umfasst:
einen Körper (42, 142);
einen sich in den Körper (42, 142) erstreckenden Durchgang (40, 240);
mehrere Öffnungen (66, 68) zu dem Durchgang (40, 240); und
einen Schlauch (44, 144), der sich um mindestens einen Teil des Körpers (42, 142) erstreckt und mindestens eine Öffnung (66) der mehreren Öffnungen versperrt, **dadurch gekennzeichnet, dass** der Schlauch (44, 144) elastomer ist und dahingehend ausgebildet ist, die mindestens eine Öffnung (66) als Reaktion auf vorbestimmte Druckdifferenziale zu öffnen und zu schließen.

2. Stopfen (36) nach Anspruch 1, wobei:
der Körper (42) ein erstes und ein zweites Ende aufweist, die sich gegenüberliegen;
die mindestens eine Öffnung eine Auslassöffnung (66) ist, die zwischen dem ersten und dem zweiten Ende des Körpers (42) positioniert ist;
die mehreren Öffnungen eine Einlassöffnung (68) umfassen, die nahe dem ersten Ende des Körpers (42) positioniert ist;
der Durchgang (40)
einen stromaufwärtigen Abschnitt, der sich von der Einlassöffnung (68) entlang einer Längsachse zu dem zweiten Ende des Körpers (42) erstreckt; und
einen stromabwärtigen Abschnitt, der sich von dem stromaufwärtigen Abschnitt in einer lateralen Richtung, die quer zu der Längsrichtung verläuft, zu der Auslassöffnung (66) erstreckt, umfasst; und
sich der Schlauch um die Längsachse erstreckt.

3. Stopfen (36) nach Anspruch 2, wobei das zweite Ende des Körpers (42) bezüglich des Durchgangs (40) dauerhaft verschlossen ist.

4. Stopfen (36) nach Anspruch 2, wobei:
der Körper (42) eine Außenfläche umfasst, die sich um die Längsachse erstreckt und die Auslassöffnung (66) definiert; und
sich der Schlauch (44) so um die Außenfläche erstreckt, dass sich eine Innenfläche des Schlauchs (44) sowohl zu der Außenfläche als auch der Auslassöffnung (66) in einander gegenüberliegender Beziehung befindet.

5. Kombination aus einem Stopfen (36) nach Anspruch 1 und einem Injektor (38), wobei:
die mindestens eine Öffnung eine Auslassöffnung (66) ist; die mehreren Öffnungen eine Einlassöffnung (68) umfassen; und
der Injektor (38) eine Austrittsdüse (48) zum Zusammenfügen mit der Einlassöffnung (68) und zum Herausleiten der Flüssigkeit in den Durchgang (40), während die Austrittsdüse (48) mit der Einlassöffnung (68) zusammengefügt ist, aufweist.

6. Kombination nach Anspruch 5, wobei mindestens eine Fläche des Injektors (38) und mindestens eine Fläche des Stopfens (36)gegenseitig dahingehend ausgebildet sind, zusammenwirkend miteinander in Eingriff gebracht zu werden, und der Stopfen (36) dahingehend ausgeführt ist, mittels des Injektors (38) mindestens weiter in das Loch (22) gedrückt zu werden, während die mindestens eine Fläche des Injektors (38) und die mindestens eine Fläche des Stopfens (36) zusammenwirkend miteinander in Eingriff stehen.

7. Kombination nach Anspruch 6, wobei die mindestens eine Fläche des Injektors (38) und die mindestens eine Fläche des Stopfens (36) gegenseitig dahingehend ausgebildet sind, mittels einer Presspassung lösbar aneinander befestigt zu werden.

8. Verfahren zum Injizieren einer Flüssigkeit in einen Baum, umfassend:
Anbringen eines Stopfens (36) in einem Loch (22) in dem Baum, während der Stopfen (36) auf einer Austrittsdüse (48) eines Injektors (38) positioniert ist, umfassend Bewegen der Austrittsdüse (48) näher an ein inneres Ende des Lochs (22), während der Stopfen (36) auf der Austrittsdüse (48) positioniert ist;
Speisen der Flüssigkeit in das innere Ende des Lochs (22), umfassend Herausleiten der Flüssigkeit aus der Austrittsdüse (48), während sich der Stopfen (36) in dem Loch (22) befindet und der Stopfen (36) auf der Austrittsdüse (48) positioniert ist; und
Zurückziehen der Austrittsdüse (48) von dem Stopfen (36), während der Stopfen (36) in dem Loch (22) bleibt.

9. Verfahren nach Anspruch 8, wobei das Anbringen des Stopfens (36) in dem Loch (22) Verwenden des Injektors (38) zum Drücken des Stopfens (36) mindestens weiter in das Loch (22), während der Stopfen (36) auf der Austrittsdüse (48) positioniert ist, umfasst.

10. Verfahren nach Anspruch 8, wobei das Anbringen des Stopfens (36) in dem Loch (22) sowohl Einführen des Stopfens (36) in ein äußeres Ende des Lochs (22), während der Stopfen (36) auf der Austrittsdüse (48) positioniert ist, als auch Drücken des Stopfens (36) mindestens weiter in das Loch (22), während der Stopfen (36) auf der Austrittsdüse (48) positioniert ist, mit einem einzigen Hub des Injektors (38) umfasst.

11. Verfahren zum Injizieren einer Flüssigkeit in einen Baum, umfassend:
im Wesentlichen gleichzeitiges Einführen sowohl eines Stopfens (36) als auch eines Austrittsteils des Injektors (38) in ein äußeres Ende eines Lochs (22) in dem Baum, während der Stopfen (36) auf dem Austrittsteil des Injektors (38) positioniert ist, umfassend Bewegen des Austrittsteils des Injektors (38) näher an ein inneres Ende des Lochs (22), während der Stopfen (36) auf der Austrittsdüse (48) positioniert ist;
Einspeisen der Flüssigkeit in das innere Ende des Lochs (22), umfassend Herausleiten der Flüssigkeit aus dem Austrittsteil des Injektors (38), während sich der Stopfen (36) und der Austrittsteil des Injektors (38) in dem Loch (22) befinden und der Stopfen (36) auf dem Austrittsteil des Injektors (38) positioniert ist; und
Zurückziehen des Austrittsteils des Injektors (38) sowohl von dem Stopfen (36) als auch dem Loch (22), während der Stopfen (36) in dem Loch (22) bleibt.

## Revendications

1. Bouchon (36, 136) à insérer dans un trou (22) dans un arbre, destiné à être utilisé pour injecter un liquide dans l'arbre, le bouchon comprenant :
un corps (42, 142) ;
un passage (40, 240) s'étendant dans le corps (42, 142) ;
une pluralité d'ouvertures (66, 68) vers le passage (40, 240) ; et
un tube (44, 144) s'étendant autour d'au moins une partie du corps (42, 142) et obstruant au moins une ouverture (66) de la pluralité d'ouvertures, **caractérisé en ce que** le tube (44, 144) est élastomère et conçu pour ouvrir et fermer l'au moins une ouverture (66) en réponse à des différences de pression prédéfinies.

2. Bouchon (36) selon la revendication 1,
le corps (42) comprenant des première et seconde extrémités opposées ;
l'au moins une ouverture étant une ouverture de sortie (66) positionnée entre les première et seconde extrémités du corps (42) ;
la pluralité d'ouvertures comprenant une ouverture d'entrée (68) positionnée à proximité de la première extrémité du corps (42) ;
le passage (40) comprenant
une section en amont qui s'étend le long d'un axe longitudinal, de l'ouverture d'entrée (68) vers la seconde extrémité du corps (42) ; et
une section en aval qui s'étend dans une direction latérale, qui est transversale à l'axe longitudinal, de la section en amont vers l'ouverture de sortie (66) ; et le tube (44) s'étendant autour de l'axe longitudinal.

3. Bouchon (36) selon la revendication 2, la seconde extrémité du corps (42) étant en permanence isolée du passage (40).

4. Bouchon (36) selon la revendication 2,
le corps (42) comprenant une surface externe qui s'étend autour de l'axe longitudinal et définit l'ouverture de sortie (66) ; et
le tube (44) s'étendant autour de la surface externe de sorte qu'une surface interne du tube (44) soit dans une relation de face-à-face opposée avec la surface externe et l'ouverture de sortie (66).

5. Association d'un bouchon (36) selon la revendication 1, avec un injecteur (38),
l'au moins une ouverture étant une ouverture de sortie (66) ;
la pluralité d'ouvertures comprenant une ouverture d'entrée (68) ; et
l'injecteur (38) comprenant une buse de décharge (48) destinée à s'accoupler avec l'ouverture d'entrée (68) et à décharger le liquide dans le passage (40) pendant que la buse de décharge (48) est accouplée avec l'ouverture d'entrée (68).

6. Association selon la revendication 5, au moins une surface de l'injecteur (38) et au moins une surface du bouchon (36) étant réciproquement conçues pour venir en prise de manière coopérative l'une avec l'autre, et le bouchon (36) étant conçu pour être poussé au moins plus loin dans le trou (22) au moyen de l'injecteur (38) pendant que l'au moins une surface de l'injecteur (38) et l'au moins une surface du bouchon (36) sont en prise de manière coopérative l'une avec l'autre.

7. Association selon la revendication 6, l'au moins une surface de l'injecteur (38) et l'au moins une surface du bouchon (36) étant réciproquement conçues pour être fixées de manière amovible l'une à l'autre par un ajustement serré.

8. Procédé d'injection de liquide dans un arbre, comprenant les étapes consistant à :
monter un bouchon (36) dans un trou (22) dans l'arbre pendant que le bouchon (36) est positionné sur une buse de décharge (48) d'un injecteur (38), comprenant l'étape consistant à rapprocher la buse de décharge (48) d'une extrémité interne du trou (22) pendant que le bouchon (36) est positionné sur la buse de décharge (48) ;
amener le liquide dans l'extrémité interne du trou (22), comprenant l'étape consistant à décharger le liquide de la buse de décharge (48) pendant que le bouchon (36) est dans le trou (22) et le bouchon (36) est positionné sur la buse de décharge (48) ; et
retirer la buse de décharge (48) du bouchon (36) pendant que le bouchon (36) reste dans le trou (22).

9. Procédé selon la revendication 8, le montage du bouchon (36) dans le trou (22) comprenant l'étape consistant à utiliser l'injecteur (38) pour pousser le bouchon (36) au moins plus loin dans le trou (22) pendant que le bouchon (36) est positionné sur la buse de décharge (48) .

10. Procédé selon la revendication 8, le montage du bouchon (36) dans le trou (22) comprenant les étapes consistant à introduire le bouchon (36) dans une extrémité externe du trou (22) pendant que le bouchon (36) est positionné sur la buse de décharge (48), et à pousser le bouchon (36) au moins plus loin dans le trou (22) pendant que le bouchon (36) est positionné sur la buse de décharge (48), avec une course unique de l'injecteur (38).

11. Procédé d'injection de liquide dans un arbre, comprenant les étapes consistant à :
introduire sensiblement simultanément un bouchon (36) et une partie de décharge d'un injecteur (38) dans une extrémité externe d'un trou (22) dans l'arbre pendant que le bouchon (36) est positionné sur la partie de décharge de l'injecteur (38), comprenant l'étape consistant à rapprocher la partie de décharge de l'injecteur (38) d'une extrémité interne du trou (22) pendant que le bouchon (36) est positionné sur la buse de décharge (48) ;
amener le liquide dans l'extrémité interne du trou (22), comprenant l'étape consistant à décharger le liquide de la partie de décharge de l'injecteur (38) pendant que le bouchon (36) et la partie de décharge de l'injecteur (38) se trouvent dans le trou (22) et le bouchon (36) est positionné sur la partie de décharge de l'injecteur (38) ; et
retirer la partie de décharge de l'injecteur (38) du bouchon (36) et du trou (22) pendant que le bouchon (36) reste dans le trou (22).
